Europäisches Patentamt

European Patent Office

Office européen des brevets

(11) Publication number: **0 152 309 B1**

## EUROPEAN PATENT SPECIFICATION

(45) Date of publication of patent specification: **22.01.92**  (51) Int. Cl.5: **H04N 7/093**, H04N 7/16

(21) Application number: **85301026.2**

(22) Date of filing: **15.02.85**

(54) Television sound signal processing apparatus.

(30) Priority: **15.02.84 JP 26334/84**
**15.02.84 JP 26337/84**

(43) Date of publication of application:
**21.08.85 Bulletin  85/34**

(45) Publication of the grant of the patent:
**22.01.92 Bulletin  92/04**

(84) Designated Contracting States:
**DE FR GB**

(56) References cited:
GB-A- 2 038 137
US-A- 4 424 532

**ELEKTRISCHES NACHRICHTENWESEN, vol. 52, no. 1, 1977, Stuttgart H.Dirks et al. "TV-PCM6-Ein System zur integrierten TV-Ton- übertragung" pages 69-74.**

**FUNK-TECHNIK 38 (1983), no. 5, München, Heidelberg "Sprachübertragung mit Delta-Modulation" pages 199-202.**

(73) Proprietor: **MATSUSHITA ELECTRIC INDUSTRI-AL CO., LTD.**
**1006, Oaza Kadoma**
**Kadoma-shi, Osaka-fu, 571(JP)**

(72) Inventor: **Hirashima, Masayoshi**
**5-4-8 Kasuga**
**Ibaraki-shi Osaka-fu 567(JP)**

(74) Representative: **Crawford, Andrew Birkby et al**
**A.A. THORNTON & CO. Northumberland**
**House 303-306 High Holborn**
**London WC1V 7LE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to an apparatus for receiving and decoding signals in a system for coding and transmitting video and sound signals such as a CATV system or a pay tv system, and more particularly to the receiving and decoding means for sound signals.

In a pay TV system or the like, video and sound signals are transmitted in encoded form so as to be inaccessible to nonsubscribers, and they are decoded by subscribers, so that normal picture and sound may be reproduced. Various video and sound coding means and methods have been proposed so far, but they all had individual problems.

For example, encoding by inverting black and white colors of video signal only, by compressing the synchronizing signal, and by inverting the synchronizing signal have been found to be easy to decode, and the signals were therefore easily accessed illegally. A method of encoding by eliminating the synchronizing signal produced an unstable picture because of jitter produced by reconstructing the synchronizing signal. A method of encoding by eliminating the color burst signal resulted in inaccuracies in the phase of the reproduced color burst signal and unstable colours.

As methods of encoding sound signals, a method of scrambling PCM sound was too broad in bandwidth when another sound carrier was used and was unsuited to FM broadcast such as in a satellite broadcasting system, and its decoding unit was expensive. In a method of transmitting sound using a plurality of carriers and changing them over randomly resulted in a complicated decoding unit and it was found to be difficult to balance the stereo sound reproduction.

A coding and decoding system for video and audio signals is disclosed in US patent 4,424,532. The system includes means at the transmitter for deriving clock and internal timing signals from the video signal. The internal timing signals are utilized at the transmitter to provide digital audio data representative of the program audio signal. The digital data is derived by sampling the program audio signal during horizontal lines of the video signal. The synchronizing information in the horizontal and vertical blanking intervals of the video signal is suppressed and the digital audio data and data representative of a decoder clock signal are inserted in the horizontal blanking intervals. Vertical reference signal data is inserted into the vertical blanking intervals of the video signal as it is transmitted. At the decoder there are means for reconstructing the audio signal from the digital audio data. There is an independent sync pulse generator at the decoder which is controlled by the lock data and the vertical reference signal data and which provides the appropriate synchronizing information for the video signal. The video signal without sync information, is combined with the separately generated sync pulses from the sync pulse generator and with the reconstituted audio to provide a television program signal usable at a conventional receiver.

It is hence an object of this invention to present a television sound signal processing apparatus which is hard to be accessed illegally and excellent in quality of sound reproduction. It is another object of this invention to provide a television sound signal processing apparatus capable of eliminating the accumulation of errors when decoding delta-encoded sound signals.

The present invention provides a television sound signal processing apparatus for demodulating and decoding received digital sound signals, comprising:

means for receiving digital sound signals superposed in the horizontal blanking period of the television signal;

characterized in that said means comprises means for receiving delta-modulated and compressed digital sound signals $\Delta x$ superposed in the horizontal blanking period of the television signal; and in that the apparatus further includes

means for successively receiving uncompressed reference digital sound signals superposed in one line of each field of the television signal;

means for determining for a given field the difference value between the value of the reference digital sound signal of the given field and the value of reference digital sound signal of the preceding field;

means for performing signal processing on said received digital sound signals for the given field using the demodulated value of the delta-encoded digital signal immediately before the reference digital sound signal of the given field as the reference digital sound signal value if said difference value obtained by the determining means exceeds a predetermined value.

Moreover, the majority value of reference signals transmitted repeatedly three times or more in an odd number within a same horizontal blanking period of a vertical blanking period is used as the reference value for delta decoding of sound signal of the field.

In the television sound signal processing apparatus of this invention, what is more, a sound signal of a television signal is sampled and converted into a form of multivalue digital signal, its uncompressed digital signal is sent in a certain period while, in the other period, receiving a digital signal representing the

2

difference from the sampled value of sound signal in one horizontal blanking period before being sent into a horizontal blanking period, and supposing the value of uncompressed digital signal to be reference value x and the value of the next compressed digital signal to be $\Delta x$, the value $\Delta x$ of the subsequent compressed digital signal is added to the immediately preceding process signal every time as $x = x + \Delta x$, and an uncompressed digital sound signal is obtained, which is converted to an analog sound signal.

Further, when an uncompressed digital sound signal is sent in the vertical blanking period once in every field, this digital value is taken as the reference, and the signals are processed every time as $x = x + \Delta x$ in relation to the subsequent compressed digital signal value $\Delta x$ to obtain a digital sound signal in compressed state, which is converted to an analog sound signal.

In order that the present invention be more readily understood, embodiments thereof will now be described by way of example with reference to the accompanying drawings, in which:-

Figure 1 is a block diagram showing the outline of the television sound signal processing apparatus in one of the embodiments of the present invention;

Figure 2 is a waveform diagram of signals in the horizontal blanking period in the same apparatus;

Figure 3 is a waveform diagram of signals in the vertical blanking period in the same apparatus;

Figure 4 is a block diagram of a sound signal composite circuit of the same apparatus;

Figure 5 is a block diagram representing the synchronous reproducing circuit of the same apparatus;

Figure 6 is a flow chart showing the synchronous reproducing procedure of the circuit shown in Figure 5;

Figure 7 is a waveform diagram of sound data signals in the same apparatus;

Figure 8 is a block diagram illustrating the processing signal of the same sound data signals;

Figure 9 is a waveform diagram showing the reference sound signal in the same apparatus;

Figure 10 is a waveform diagram of sound data signals; and

Figure 11 is a block diagram showing the processing circuit of sound data in the same apparatus.

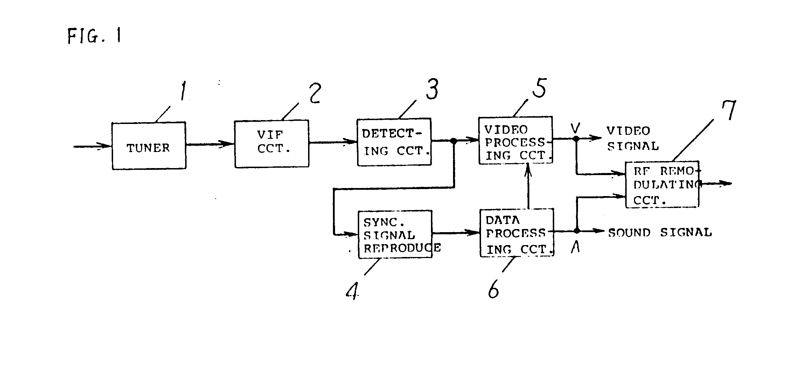

One of the present embodiments is illustrated in conjunction with Figure 1, wherein numeral 1 denotes the tuner of a television receiver, 2 is a VIF circuit, 3 is a detecting circuit, 4 is a circuit to reproduce synchronising signals, and 5 is a circuit to change over whether or not to invert the video signal on the basis of the data processing result of a data processing circuit 6. This data processing circuit 6 is intended to process the data, convert digital sound into analog signal, and deliver a discriminating signal (changeover signal) to determine whether or not to invert the video signal. Numeral 7 is a circuit to form a signal of RF (VHF) using the sound and image normalized in a remodulation circuit of RF as the inputs.

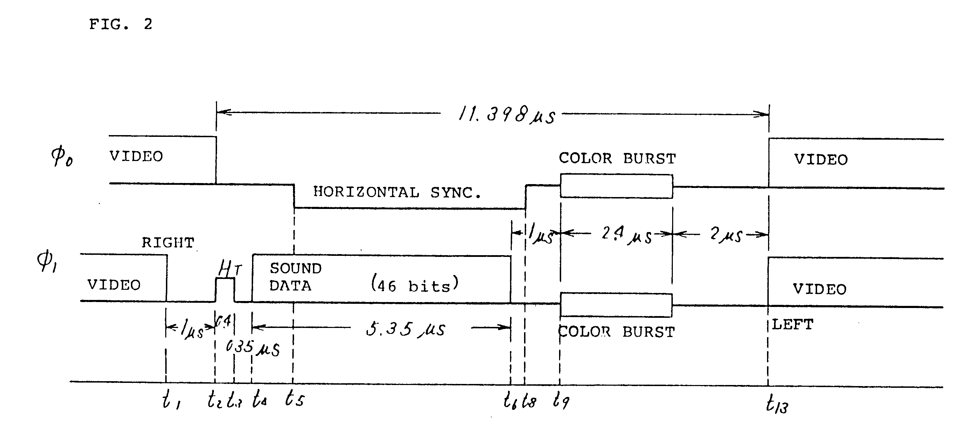

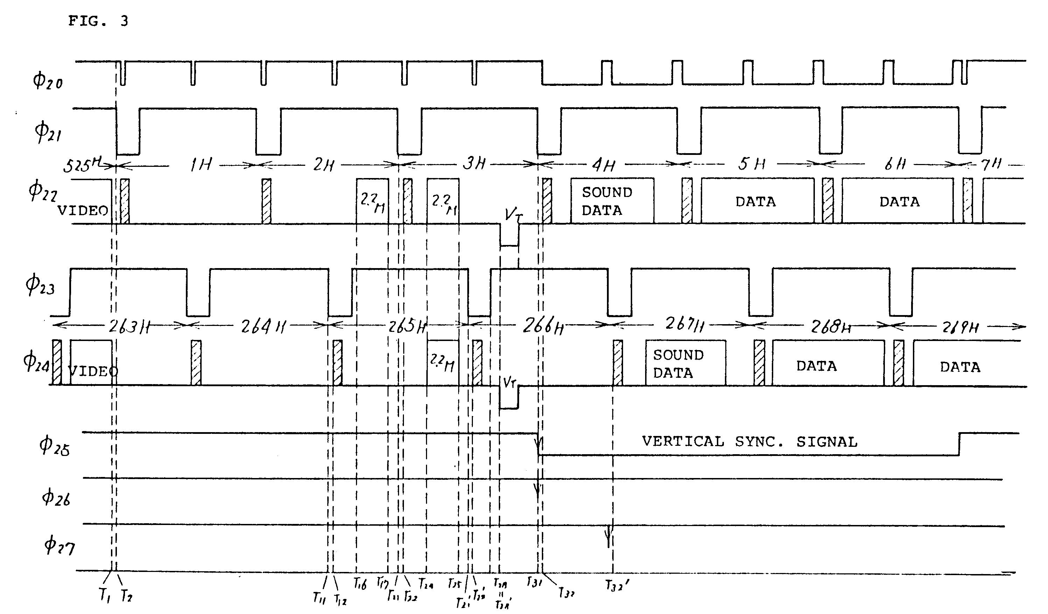

The output of the detecting circuit 3 lacks horizontal synchronizing signal and vertical synchronizing signal as shown in Fig. 2 $\phi_1$, Fig. 3 $\phi_{22}$, $\phi_{24}$, and vertical trigger signal $V_T$ and horizontal trigger signal $H_T$ are inserted instead. The shaded areas $\phi_{22}$, $\phi_{23}$ in Fig. 3 are in same composition as $t_2$ to $t_6$ in Fig. 2 $\phi_1$. The polarity of the video signal is repeatedly inverted and noninverted at random intervals in the unit of horizontal scanning line unit or screen unit. When the polarity of color burst signal is changed, however, hue deviation or other problems may occur. Therefore, the color burst signal is not inverted.

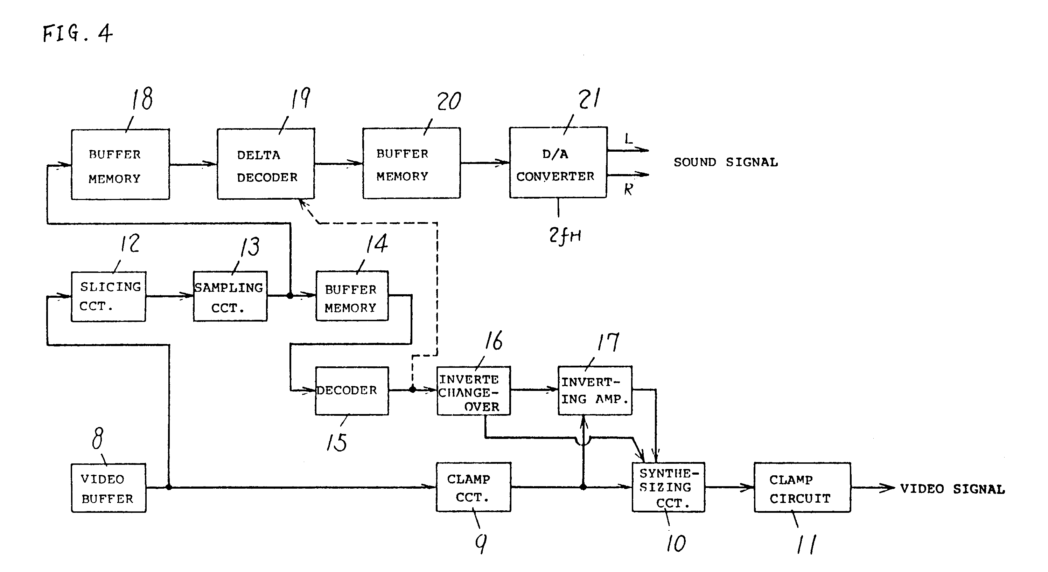

Hereunder the reproduction of synchronizing signal is described. First, the outline of the operation is mentioned by referring to Fig. 4. Supposing synchronous reproduction be done, the output of a buffer 8 is sliced in a slicing circuit 12 and shaped into a binary signal, and is sampled in a sampling circuit 13 to store sound data at every H in a buffer memory 18, while the delta-encoded signal is decoded in a delta decoder 19 and transferred into a buffer memory 20, of which output is D-A converted at a speed of 2 $f_H$ by D/A converter 21, and two outputs for right and left are obtained using the high quality sound of sampling rate $2f_H$ and maximum frequency $f_H$ as the output of D/A converter 21.

On the other hand, the data of 5H to 7H, 268H to 270H in Fig. 3 are written into a buffer memory 14, read out, and decoded in a decoder 15, and a signal to determine whether or not to invert the video signal is delivered, while a pulse to determing the inverting period is formed in an inverting changeover circuit 16 and applied to a synthesizing circuit 10. The output of a clamp circuit 9 is inverted in an inverting amplifier 17, of which output is also applied to the synthesizing circuit 10, and the output of the synthesizing circuit 10 is changed over whether the output of clamp circuit 9 or the output of the inverting amplifier 17 is applied, by the output of the inverting changeover circuit 16. The output of the inverting changeover circuit 16 is also applied to the inverting amplifier 17, and the output of the inverting amplifier 17 is suppressed when inversion is not required, and the crosstalk is lessened in the synthesizing circuit 10. When the output of the synthesizing circuit 10 is clamped in a clamp circuit 11, an ordinary video signal is obtained.

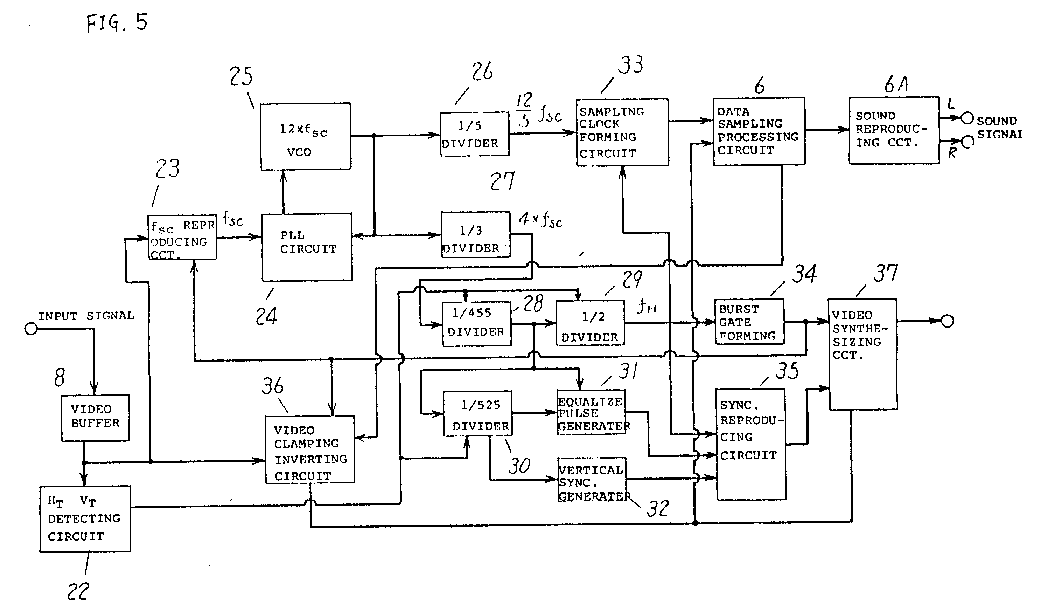

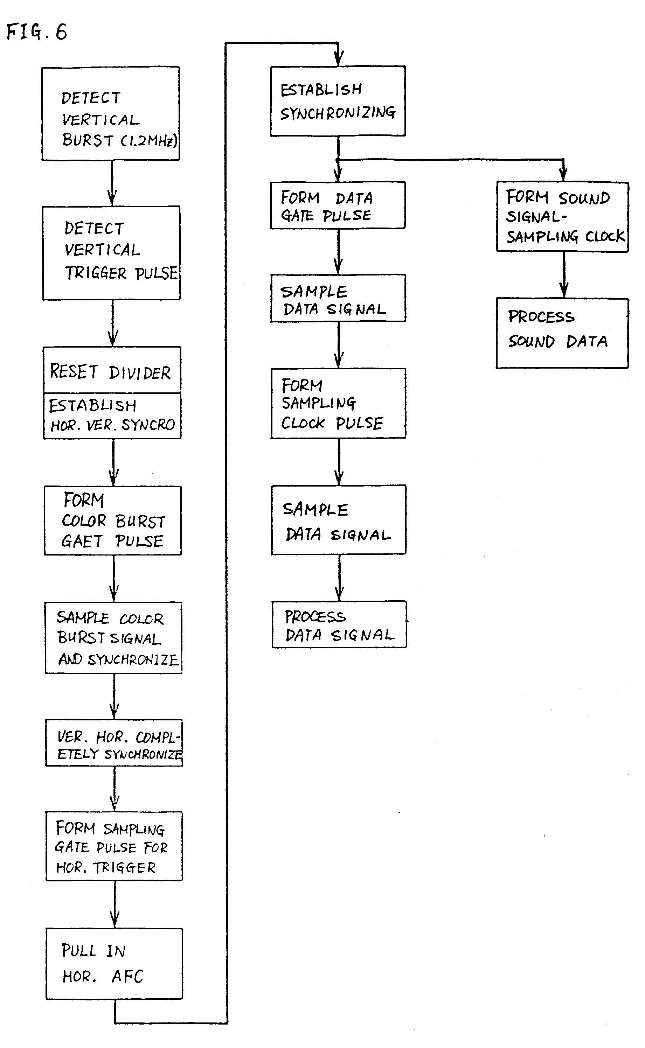

The synchronous reproduction is described in details below in conjunction with Fig. 5. The procedures of synchronous reproduction and data processing are shown in Fig. 6. Numeral 22 in Fig. 5 is a detecting circuit of vertical trigger signal $V_T$, horizontal trigger signal $H_T$, 23 is a reproducing circuit of color subcarrier $f_{sc}$, 24 is a circuit for effecting PLL (phase locked loop) of $6f_{sc}$ and $f_{sc}$ of VCO (voltage controlled oscillator) 25, 26 is a 1/10 divider, 27 is a 1/3 divider, and 28 is a 1/455 divider of the output of 1/3 divider 27, that is,

$4f_{sc}$, of which output is $2f_H$. Numeral 29 is a 1/2 divider, of which output is $f_H$, and 30 is a 1/525 divider of $2f_H$, of which output is about 60 Hz. Numeral 31 is an equalizing pulse generator, and 32 is a generator of vertical synchronizing signal. Numeral 28 through 32 are known circuits as the synchronizing board of TV signals. Numeral 33 is a sampling clock forming circuit, and when the data transmission rate is $6/5f_{sc}$, a sampling clock is formed by using $12/5f_{sc}$ of the output of the 1/5 divider 26. The output of the sampling clock forming circuit 33 is applied to a data sampling processing circuit 6 to be sampled, and the data is processed. Numeral 6A is a sound reproducing circuit for forming analog sound. Numeral 34 is a burst gate forming circuit for forming a burst gate from the output of the 1/2 divider 29. In a synchronous reproducing circuit 35, composite synchronizing signals are formed from the outputs of dividers 29, 31, 32, and the composite synchronizing signal output of this circuit 35 and the output of video clamp, inverting circuit 36 are synthesized in a video synthesizing circuit 37, and a video signal is formed. The video clamp, inverting circuit 36 clamps the video signal, and inverts the video signal for a required period according to the output of the data sampling processing circuit 6.

Thereafter, in the procedure shown in Fig. 6, the synchronizing signal is established, the data is processed, and the sound is processed.

Parameters of sound signal and information data are shown in Tables 1 and 2, in which the sound signals in the horizontal blanking period are indicated.

## Table 1

| Item | Numerical value |
|---|---|
| Data transmission rate | $\frac{12}{5}f_{sc}$ = 8,590,908 Hz |
| Max. frequency component of data (fundamental wave) | 4,295,454 Hz |
| One-bit width of data | Approx. 116.402 nsec |
| Sound data per 1H | 46 bits |
| Right sound data | 22 bits (2 samples) |
| Left sound data | 22 bits (2 samples) |
| Start bit | 2 bits |
| Sound sampling rate | $2f_H \doteq 31.468$ kHz |
| Sound max. frequency component | $f_H \doteq 15.734$ kHz |
| No. of bits per one sound sample | 11 bits |
| Modulation method of digital sound signal | Delta encoding |
| Initializing period of sound signal | One field |
| Initializing data of sound signal | 16 bits |

Table 2

| Item | Numerical value | |
|---|---|---|
| Transmission speed of information data | $\frac{6}{5} f_{sc}$ = 4,295,454 Hz | |
| One-bit width of information data | Approx. 116.4 ns | |
| No. of information data pieces per 1H | 440 bits (55 bytes) | |
| Information data superposing period (within 1H) | $440 \times 0.1164$ | 51.22 $\mu$s |
| Bit period | 10101010101010 (2 bytes) | |
| Frame period | 11100101 (1 byte) | |

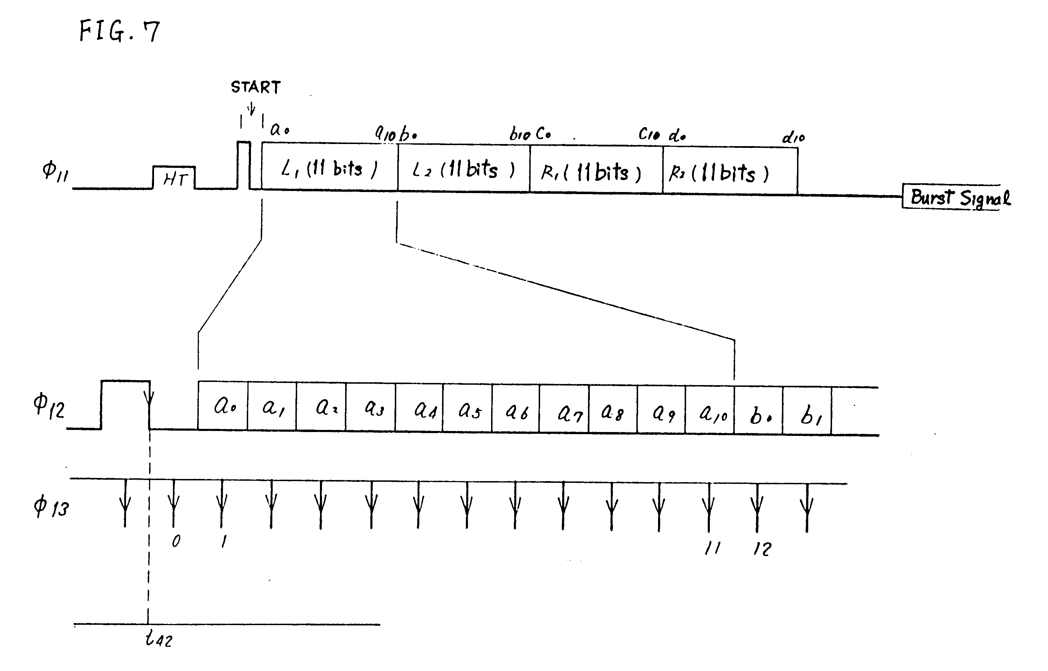

As evident from Table 1 and Fig. 7, a total of 44 bits comprising two samples each at the right and left are sent forth every H, and a phase matching circuit for 1, 0 is provided before it. In Fig. 7, based on the fall of the first bit of $\phi_{12}$, 45 clock pulses are generated thereafter from $\overline{0}$ to $\overline{44}$. When the phase of $\phi_{13}$ is adjusted so that the 1/5 divider 26 may be reset at the first bit of $\phi_{12}$, the time for $\phi_{12}$ settles within the portion of one cycle of $12f_{sc}$, that is, about 23 ns (±11.5 ns).

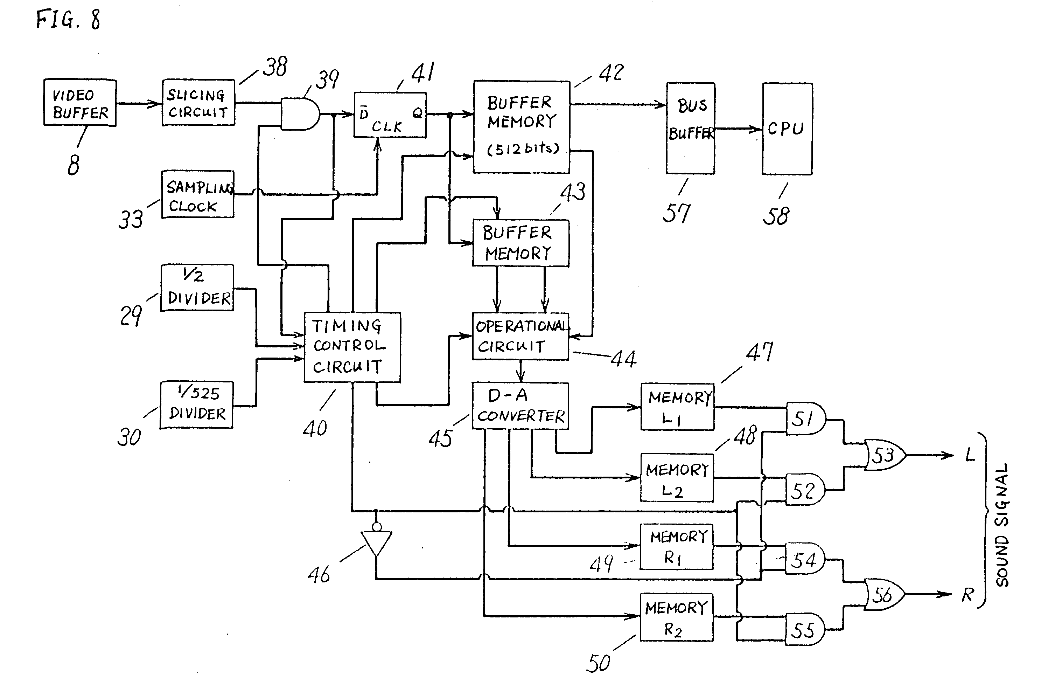

An example of sampling and sound signal processing circuit is shown in Fig. 8. The output of the buffer 8 is sliced in a slicing circuit 38, and a binary waveform as shown in Fig. 7 $\phi_{12}$ is obtained. On the other hand, in a timing control circuit 40, gate pulses containing a portion of sound signal ($t_2$ to $t_6$ in Fig. 2) are generated from the outputs of 1/2 divider 29 and 1/525 divider 30, and are applied to an AND gate 39, and only the sound signals are extracted and applied to D terminal of D flip-flop 41. When the D flip-flop 41 is clocked by Fig. 7 $\phi_{13}$, the data can be sampled. The fall of $t_{42}$ is detected by the output of the AND gate 39, and clocks $\overline{0}$ to $\overline{44}$ are generated as stated above.

The buffer memory 43 is controlled by the timing control circuit 40 so that the output of the D flip-flop 41 may be fed to the buffer memory 43 only for the portion of 44 bits of $\overline{1}$ to $\overline{44}$. A control signal is sent from the timing control circuit 40 to the buffer memory 42 so that data for the portion of 440 bits may be stored. When the sound data in Fig. 3 is received in the VBL, uncompressed L and R digital values (for example, 14 bits each) thereof are stored in the buffer memory 42, and are transmitted to an arithmetic circuit 44 a short time later. Said 14 bits will be corrected if there is an error of 1 to 2 bits or more.

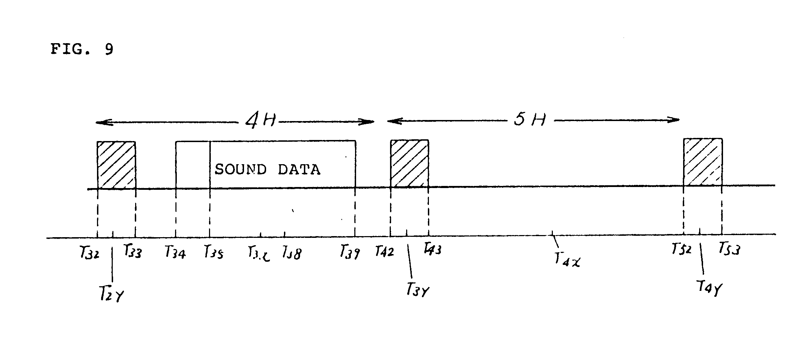

In Fig. 9, if there are 2 × 14 bits (including error correction code) in $T_{34}$ to $T_{35}$, the error should be corrected from $T_{35}$ to $T_{42}$. This is effected in a circuit attached to the buffer memory 42.

On the other hand, the data of $T_{32}$ to $T_{33}$ is stored in the buffer memory 43 somewhat later (for example, 1 $\mu$s) than $T_{33}$. Supposing this time to be $T_{33}$ + $\Delta$T, the data of $a_0$ to $a_{10}$ and the previous data are arithmetically operated within, for example, 1 $\mu$s, from $T_{33}$ + $\Delta$T. When the operation and error correction are done in hard logic, both operations can be processed within 1 $\mu$s each. The result of this arithmetic operation is D-A converted by the D-A converter 45 and stored in memory $L_1$ of 47. Furthermore, the data of $c_0$ to $c_{10}$ is compared with the previous data, and the result is D-A converted and stored in memory $R_1$ of 49. Numerals 47 through 50 are analog memories.

It is sufficient when the above operations be done within about 1/2H, and when the error correction circuit and arithmetic operation circuit are composed in hard logic as mentioned above, 11 bits of memories $L_1$, $R_1$ may be completely processed within several to ten micro-seconds. The time of delivering the data $L_1$, $R_1$ of $T_{3x}$ in Fig. 9 is nearly in the middle of 1H (common to each H). Therefore, there is an allowance of about 26 $\mu$s between $T_{33}$ and $T_{3x}$, and the safe margin is sufficient if the above processing time is assumed to be about 10 $\mu$s. From $T_{3x}$, processing of $c_0$ to $c_{10}$, $d_0$ to $d_{10}$ is effected. They are delivered from memory $L_2$ of 48 and memory $R_2$ of 50, at $T_{3y}$ in 1/2H after $T_{3x}$.

The output of each memory of 47 to 50 is alternately delivered from AND gates 51 to 55 and OR gates 53, 56. That is, in $T_{3x}$ to $T_{3y}$, since the output of timing control circuit 40 is at low level, the output of the inverter 46 becomes high level, and AND gates 51, 54 are made to conduct, so that the contents of memories 47, 49 may be taken out as L and R sounds, respectively. In $T_{3y}$ to $T_{4x}$, since the output of timing control circuit 40 is at high level, the AND gates 52, 55 are made to conduct, and the outputs of memories 48, 50 becomes L and R outputs. The operation is the same for other Hs.

The sound data received at time $T_{34}$ to $T_{35}$ is processed until $T_{39}$, and is fed to an arithmetic operation circuit 44 at $T_{42}$, and, at this time, 11 bits each of $L_1$, $R_1$ of $T_{42}$ to $T_{43}$ are ignored, and are directly D-A converted. The data sent within $T_{34}$ to $T_{35}$ in Fig. 9 is delivered. That is, uncompressed data is used only for one sample in every field. Thereafter, taking this value as the starting value, only the change portion is

5

successively added or subtracted as described above. Meanwhile, if the first one bit of 11 bits is treated as a code, the remaining 10 bits are increments or decrements. Therefore, it is possible to follow up the changes of 60 dB. By thus processing digital sound signals, the reference value can be transmitted once in every field correctly by adding an error correction code even in a so-called digital enconding of 11 bits, so that the sound signals are of sufficient integrity and resistant to noise.

Numerals 57, 58 in Fig. 8 are parts of signal processing circuit used in a so-called teletext receiver or the like, and 57 is a bus buffer and 58 is a CPU. The data in the VBL after 4H in Fig. 3 is processed in these bus buffer 57 and CPU 58, of which composition is known, being similar to that of a so-called teletext receiver.

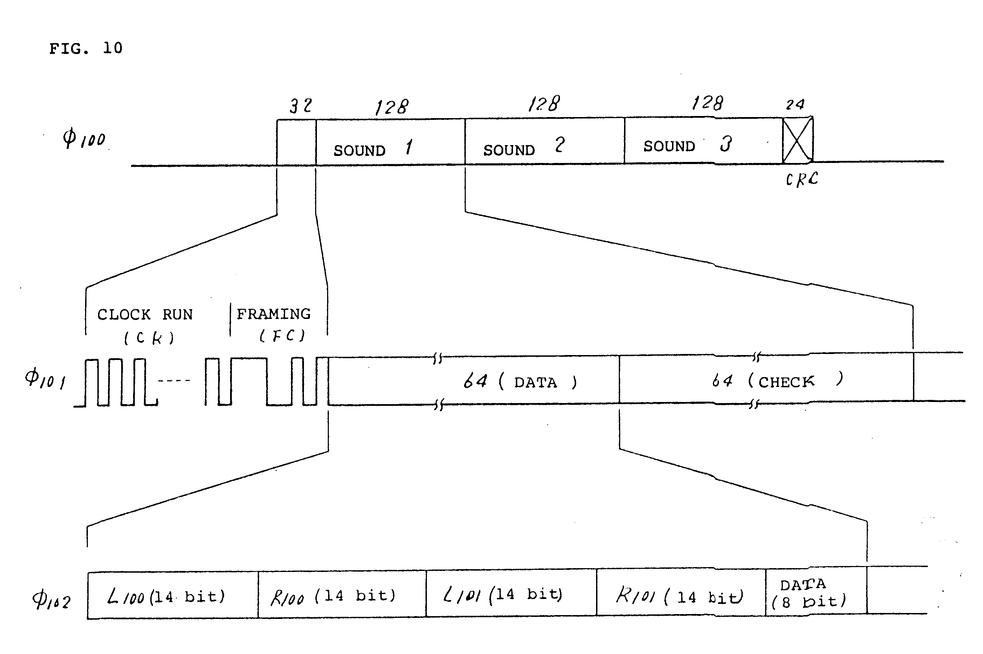

An accurate reproduction of the reference value of sound is described below while referring to Figs. 9 to 11. The actual sound data in Fig. 9 is assumed as shown in Fig. 10. At $\phi_{100}$, the preceding 32 bits are composed of 24 repetitive bits of 1 and 0 of clock run (CR) and 9 bits of framing code. The next 384 bits consist of three sets of sound data of 128 bits each, having the same content, comprising 64 bits of information and 64 bits of check code as in $\phi_{101}$. This takes the form of source BCH code, and can correct random and burst error within 10 bits. The final 24 bits of $\phi_{100}$ are CRC codes. The information of 64 bits consists of the portion of two fields each for L and R, $2 \times 2 \times 14 = 56$ bits, and 8 bits of additional data. The 8-bit data may be used as required, and CRC may not be necessarily used.

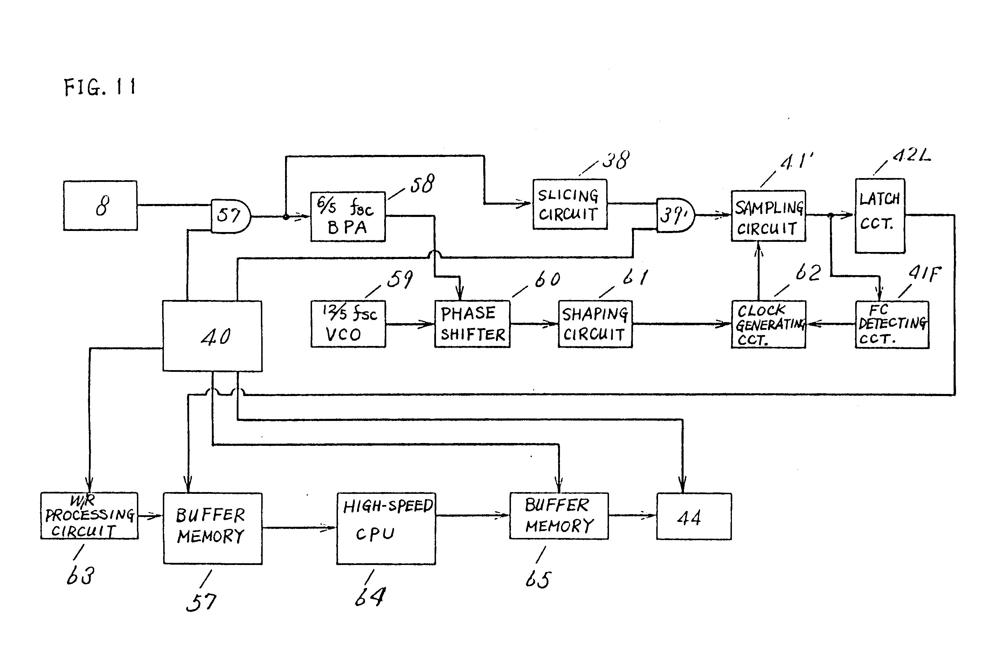

The flow of signal is explained in Fig. 11. Numeral 57 is an analog gate, and gate pulses comprising $T_{34}$ to $T_{39}$ in 4H in Fig. 9 are generated in the timing control 40, and the output of video buffer 8 is gated. If any data of the same number of bits is wholly superposed, for example, up to 21H in VBL, gate pulses including $T_{34}$ to $T_{39}$ (440 bits) are delivered every H from the timing control circuit 40 from 4H to 21H and 267H to 284H, and are applied to a gate 57. The output of the gate 57 is converted into a binary value in the slicing circuit 38, and is gated by the output of the timing control circuit 40 at AND gate 39'. The AND gate 39', different from the gate 39 in Fig. 8, is made to conduct if the gate 57 conducts in other periods than the horizontal blanking period. In the horizontal blanking period, the parts except buffer memory 42, bus buffer 57, and CPU 58 in Fig. 8 will operate as stated above. A sampling circuit 41', different from the 41 in Fig. 8, is a shift register having an S-P converting function.

On the other hand, the output of gate 57 is applied to BPA 58 of $6/5f_{sc}$, and the part of clock run-in in Fig. 10 $\phi_{101}$ appears as sine wave. This is used to control the phase of the output of VCO 59 of $12/5f_{sc}$. Numeral 60 is a phase shifter, and the phase of the output of VCO 59 is matched with the phase of the output of BPA 58 by the output of BPA 58, that is, the rise or fall of the output of the phase shifter 60 is adjusted to the middle of each bit of received $\phi_{101}$, and after the clock run period, phase information is not received but is held until the clock run of next horizontal scanning period or clock run of next field. Thus, since at least 1H can be sufficiently maintained within a same phase, a clock synchronized with data can be formed in the phase shifter 60. The circuit of phase shifter 60 is an analog one, and its output is shaped into pulses in a shaping circuit 61, and supplied into a clock generating circuit 62. The clock is supplied from the clock generating circuit 62 into the sampling circuit 41', and when a framing code appears in the output of the sampling circuit 41', it is detected in FC detecting circuit 41F, and the subsequent 440 - 32 = 408 clocks are supplied into the sampling circuit 41', and 408 bits in 1H are sampled, and supplied into a latch circuit 42L. In the latch circuit 42L, the output of the sampling circuit 41' is latched by every 8 bits, and is supplied into the buffer memory 57. Data for the portion of two fields is stored in the buffer memory 57.

Writing and reading of data into the buffer memory 57 are controlled in W/R processing circuit 63. The contents in the buffer memory, that is, the data in the corresponding field (the portion of three times of $L_{100}$, $R_{100}$ in Fig. 10 $\phi_{102}$) of $2 \times 56 \times 3$ bits for the portion of two fields are compared. As stated above, since the same data is stored three times, the most frequently occuring value is determined by comparison, and $L_{101}$, $R_{101}$ are determined. If not determined, the $L_{100}$, $R_{100}$ stored in the previous field are used. The $L_{101}$, $R_{101}$ are held up to the next field.

These processings are done by the high speed CPU 64 or hard logic. The time available for processing is about 40 $\mu$s at maximum of $T_{39}$ to $T_{4x}$ in Fig. 9, but it is necessary to finish somewhat before $T_{4x}$.

The output of the CPU is stored in the buffer memory 65, and applied to the arithmetic operation circuit 44 before $T_{4x}$ to be used as the reference value at the time of $T_{4y}$, and is also D-A converted and stored in memories 47, 49 before $T_{4x}$. Thus, since the reference values of L and R are obtained once in every field without being compressed, the operation returns to a normal state within one field if malfunction occurs during delta decoding.

In Fig. 10, incidentally, error correction, three times of majority decision, and forwarding of data in previous field are mentioned to take place simultaneously, but it is the same if they are done separately. Or, at $\phi_{102}$, only $L_{100}$ and $R_{100}$ may be used and the remaining 28 bits may be used in other data. When effected as in Fig. 10, if $\phi_{102}$ skips in one field, the value in the previous field may be used. In delta decoding system, errors may be accumulated, but in this system, the data returns to the correct value within one field.

Thus, this invention presents a processing circuit for delivering sound of high quality containing reproduced image, which is hard to be illegally accessed, in decoding encoded sound signals. It is another advantage that the decoding circuit is suited to LSI and is practical.

The above disclosure is based on a 525 line television system but is equally applicable to other systems e.g. 625 line or 1050 line systems.

**Claims**

1. A television sound signal processing apparatus for demodulating and decoding received digital sound signals, comprising:

means (8,30,33,38-41,43) for receiving digital sound signals superposed in the horizontal blanking period of the television signal;

characterized in that said means (8,30,33,38-41,43) comprises means for receiving delta-modulated and compressed digital sound signals $\Delta x$ superposed in the horizontal blanking period of the television signal; and in that the apparatus further includes

means (8,29,30,33,38-41,42) for successively receiving uncompressed reference digital sound signals superposed in one line of each field of the television signal;

means (42-44) for determining for a given field the difference value between the value of the reference digital sound signal of the given field and the value of reference digital sound signal of the preceding field;

means (44) for performing signal processing on said received digital sound signals for the given field using the demodulated value of the delta-encoded digital signal immediately before the reference digital sound signal of the given field as the reference digital sound signal value if said difference value obtained by the determining means (42-44) exceeds a pre-determined value.

2. A television sound signal processing apparatus as set forth in claim 1, further comprising;

means (63,57) for storing the uncompressed reference digital sound signals for a number of fields of the television signal; and

means (64,65) for comparing the values of the stored reference digital sound signals and for selecting one of the reference digital sound signals for said signal processing.

3. A television sound signal processing apparatus as set forth in claim 2, wherein:

said means (63,57) includes means for storing the reference digital sound signal of the present filed, the previous field and the next field, for a number of fields of the television signal.

4. An apparatus according to claim 2 or 3 wherein:

said means (63,57) includes means for storing said reference digital sound signals for two periods of the television signal.

5. An apparatus according to claim 2, 3 or 4 wherein:

said means (64,65) includes means (64) for comparing the value of the plurality of reference digital sound signals and for selecting one of said signals having the most frequently occurring value among said plurality.

6. An apparatus according to any of the preceding claims, wherein:

said means (42-44) includes means (44) for generating the next value of the uncompressed digital sound signals x from the sum of the present value of the uncompressed reference digital sound signal x and the present value of the compressed digital sound signal $\Delta x$ as $x = x + \Delta x$.

7. An apparatus according to any of the preceding claims, further including:

means (45-56) for converting a decoded uncompressed digital sound signal to an analog sound signal.

**Revendications**

1. Dispositif de traitement de signaux sonores de télévision pour démoduler et décoder des signaux sonores numériques reçus, comprenant :

un moyen (8,30,33,38-41,43) pour recevoir des signaux sonores numériques superposés pendant la période de suppression de ligne du signal de télévision;

caractérisé en ce que ledit moyen (8,30,33,38-41,43) comprend un moyen pour recevoir des signaux sonores numériques modulés par modulation delta et comprimés Δx, superposés pendant la période de suppression de ligne du signal de télévision; et en ce que le dispositif comprend en outre

un moyen (8,29,30,33,38-41,42) pour recevoir successivement des signaux sonores numériques de référence non comprimés, superposés sur une ligne de chaque trame du signal de télévision;

un moyen (42-44) pour déterminer ,pour une trame donnée, la valeur différentielle entre la valeur du signal sonore numérique de référence de la trame donnée et la valeur du signal sonore numérique de référence de la trame précédente;

un moyen (44) pour exécuter un traitement de signaux sur lesdits signaux sonores numériques reçus pour la trame donnée par la mise en oeuvre de la valeur démodulée du signal numérique codé par codage delta immédiatement avant le signal sonore numérique de référence de la trame donnée comme valeur de signal sonore numérique de référence si ladite valeur différentielle obtenue par le moyen de détermination (42-44) dépasse une valeur prédéterminée.

2. Dispositif de traitement de signaux sonores de télévision selon la revendication 1, comprenant en outre:

un moyen (63,57) pour mémoriser les signaux sonores numériques de référence non comprimés pour un nombre de trames du signal de télévision; et

un moyen (64,65) pour comparer les valeurs des signaux sonores numériques de référence mémorisés et pour sélectionner un des signaux sonores numériques de référence pour ledit traitement de signaux.

3. Dispositif de traitement de signaux sonores de télévision selon la revendication 2, dans lequel:

ledit moyen (63,57) comprend un moyen pour mémoriser le signal sonore numérique de référence de la présente trame, de la trame précédente et de la trame suivante, pour un nombre de trames du signal de télévision.

4. Dispositif selon l'une quelconque des revendications 2 et 3, dans lequel:

ledit moyen (63,57) comprend un moyen pour mémoriser lesdits signaux sonores numériques de référence pendant deux périodes du signal de télévision.

5. Dispositif selon l'une quelconque des revendications 2 à 4, dans lequel:

ledit moyen (64,65) comprend un moyen (64) pour comparer la valeur de l'ensemble des signaux sonores numériques de référence et pour sélectionner un desdits signaux ayant la valeur apparaissant le plus fréquemment dans ledit ensemble.

6. Dispositif selon l'une quelconque des revendications 1 à 5, dans lequel:

ledit moyen (42-44) comprend un moyen (44) pour générer la valeur suivante des signaux sonores numériques non comprimés x à partir de la somme de la présente valeur du signal sonore numérique de référence non comprimé x et de la présente valeur du signal sonore numérique comprimé Δx comme x = x + Δx.

7. Dispositif selon l'une quelconque des revendications 1 à 6, incluant en outre:

un moyen (45-56) pour convertir un signal sonore numérique non comprimé et décodé en un signal sonore analogique.

**Patentansprüche**

1. Fernsehtonsignale bearbeitendes Gerät für eine Demodulation und Decodierung empfangener, digitaler Tonsignale

mit Hilfsmitteln (8, 30, 33, 38 bis 41, 43) zum Empfang digitaler Tonsignale, die in der horizontalen Austastperiode des Fernsehsignals überlagert sind,

dadurch gekennzeichnet, daß die Hilfsmittel (8, 30, 33, 38 bis 41, 43) eine Einrichtung zum Empfang deltamodulierter, verdichteter, digitaler Tonsignalet Δx enthalten, die in der horizontalen Austastperiode des Fernsehsignals überlagert sind, und ferner gekennzeichnet

durch eine Einrichtung (8, 29, 30, 33, 38 bis 41, 42) zum Empfang aufeinanderfolgender, unverdichteter, digitaler Bezugstonsignale, die in einer Zeile jedes Fernsehsignalfeldes überlagert sind,

durch eine Einrichtung (42 bis 44) zur Bestimmung des Differenzwertes zwischen dem Wert des digitalen Bezugstonsignals eines gegebenen Feldes und dem Wert eines digitalen Bezugstonsignales des vorhergehenden Feldes und

durch eine Einrichtung (44) für eine Signalbearbeitung der für das gegebene Feld empfangenen, digitalen Tonsignale, wobei der demodulierte Wert des deltacodierten, digitalen Signals unmittelbar vor dem digitalen Bezugstonsignal des gegebenen Feldes als digitaler Bezugstonsignalwert verwendet wird, wenn der von der Bestimmungs-Einrichtung (42 bis 44) erhaltene Differenzwert einen vorherbestimmten Wert übersteigt.

2. Fernsehtonsignale bearbeitendes Gerät, wie im Anspruch 1 dargelegt,

ferner mit Hilfsmitteln (63, 57) zur Aufbewahrung der unverdichteten digitalen Tonsignale während einer Anzahl Felder des Fernsehsignals

und mit Hilfsmitteln (64, 65) zum Vergleichen der Werte der aufbewahrten, digitalen Bezugstonsignale und zum Auswähler eines der digitalen Bezugstonsignale für die Signalbearbeitung.

3. Fernsehtonsignale bearbeitendes Gerät, wie im Anspruch 2 dargelegt, bei dem die Hilfsmittel (63, 57) eine Einrichtung zur Speicherung des digitalen Bezugstonsignals des gegenwärtigen Feldes, des vorhergehenden Feldes und des nächsten Feldes während einer Anzahl Felder des Fernsehsignals enthalten.

4. Gerät gemäß Anspruch 2 oder 3, bei dem die Hilfsmittel (63, 57) eine Einrichtung zur Speicherung der digitalen Bezugstonsignale während zweier Perioden des Fernsehsignals enthalten.

5. Gerät gemäß Anspruch 2, 3 oder 4, bei dem die Hilfsmittel (64, 65) eine Einrichtung (64) zum Vergleichen des Wertes mehrerer digitaler Bezugstonsignale und zum Auswählen eines dieser Signale enthalten, das unter ihnen den am häufigsten vorkommenden Wert besitzt.

6. Gerät gemäß einem der vorhergehenden Ansprüche, bei dem die Einrichtung (42 bis 44) eine Einrichtung (44) zur Erzeugung des nächsten Wertes unverdichteter, digitaler Tonsignale x mit Hilfe der Summe des gegenwärtigen Wertes des unverdichteten, digitalen Bezugstonsignals x und des gegenwärtigen Wertes des verdichteten, digitalen Tonsignals $\Delta x$ entsprechend der Gleichung x = x + $\Delta x$ enthält.

7. Gerät gemäß einem der vorhergehenden Ansprüche ferner mit Einrichtungen (45 bis 56) zur Wandlung eines unverdichteten, decodierten, digitalen Tonsignals in ein analoges Torsignal.

FIG. 1

FIG. 2

EP 0 152 309 B1

FIG. 3

FIG. 4

SOUND SIGNAL

VIDEO SIGNAL

18 BUFFER MEMORY
19 DELTA DECODER
20 BUFFER MEMORY
21 D/A CONVERTER 2fH
L
R

12 SLICING CCT.
13 SAMPLING CCT.
14 BUFFER MEMORY
15 DECODER
16 INVERTE CHANGE-OVER
17 INVERT-ING AMP.
10 SYNTHE-SIZING CCT.
11 CLAMP CIRCUIT

8 VIDEO BUFFER
9 CLAMP CCT.

FIG. 5

INPUT SIGNAL

VIDEO BUFFER — 8

$H_T$ $V_T$ DETECTING CIRCUIT — 22

$f_{sc}$ REPRODUCING CCT. — 23

$12 \times f_{sc}$ VCO — 25

PLL CIRCUIT — 24

$f_{sc}$

1/5 DIVIDER — 26

$\frac{12}{5} f_{sc}$

1/3 DIVIDER — 27

$4 \times f_{sc}$

SAMPLING CLOCK FORMING CIRCUIT — 33

DATA SAMPLING PROCESSING CIRCUIT — 6

SOUND REPRODUCING CCT. — 6A

L   R   SOUND SIGNAL

1/455 DIVIDER — 28

1/2 DIVIDER — 29   $f_H$

BURST GATE FORMING — 34

VIDEO SYNTHESIZING CCT. — 37

VIDEO CLAMPING INVERTING CIRCUIT — 36

1/525 DIVIDER — 30

EQUALIZE PULSE GENERATER — 31

VERTICAL SYNC. GENERATER — 32

SYNC. REPRODUCING CIRCUIT — 35

FIG. 6

```
┌─────────────────┐
│ DETECT          │
│ VERTICAL        │
│ BURST (1.2MHz)  │
└─────────────────┘
         │
         ▼
┌─────────────────┐
│ DETECT          │
│ VERTICAL        │
│ TRIGGER PULSE   │
└─────────────────┘
         │
         ▼
┌─────────────────┐
│ RESET DIVIDER   │
├─────────────────┤
│ ESTABLISH       │
│ HOR. VER. SYNCRO│
└─────────────────┘
         │
         ▼
┌─────────────────┐
│ FORM            │
│ COLOR BURST     │
│ GAET PULSE      │
└─────────────────┘
         │
         ▼
┌─────────────────┐
│ SAMPLE COLOR    │
│ BURST SIGNAL    │
│ AND SYNCHRONIZE │
└─────────────────┘
         │
         ▼
┌─────────────────┐
│ VER. HOR. COMPL-│
│ ETELY SYNCHRONIZE│
└─────────────────┘
         │
         ▼
┌─────────────────┐
│ FORM SAMPLING   │
│ GATE PULSE FOR  │
│ HOR. TRIGGER    │
└─────────────────┘
         │
         ▼
┌─────────────────┐
│ PULL IN         │
│ HOR. AFC        │
└─────────────────┘
```

```
┌─────────────────┐
│ ESTABLISH       │
│ SYNCHRONIZING   │
└─────────────────┘
    │        │
    ▼        └──────────────┐
┌─────────────────┐   ┌─────────────────┐
│ FORM DATA       │   │ FORM SOUND      │
│ GATE PULSE      │   │ SIGNAL-         │
│                 │   │ SAMPLING CLOCK  │
└─────────────────┘   └─────────────────┘
         │                     │
         ▼                     ▼
┌─────────────────┐   ┌─────────────────┐
│ SAMPLE          │   │ PROCESS         │
│ DATA SIGNAL     │   │ SOUND DATA      │
└─────────────────┘   └─────────────────┘
         │
         ▼
┌─────────────────┐
│ FORM            │
│ SAMPLING        │
│ CLOCK PULSE     │
└─────────────────┘
         │
         ▼
┌─────────────────┐
│ SAMPLE          │
│ DATA SIGNAL     │
└─────────────────┘
         │
         ▼
┌─────────────────┐
│ PROCESS         │
│ DATA SIGNAL     │
└─────────────────┘
```

15

FIG. 7

FIG. 8

FIG. 9

SOUND DATA

4H

5H

$T_{32}$ $T_{2Y}$ $T_{33}$ $T_{34}$ $T_{35}$ $T_{36}$ $T_{38}$ $T_{39}$ $T_{42}$ $T_{3Y}$ $T_{43}$ $T_{4X}$ $T_{52}$ $T_{4Y}$ $T_{53}$

FIG. 10

EP 0 152 309 B1

19

FIG. 11